# EUROPEAN PATENT APPLICATION

(11) **EP 4 434 744 A1**
(43) Date of publication of application: **25.09.2024**
(21) Application number: 24159913.3
(22) Date of filing: 27.02.2024
(51) Int. Cl.: B32B 15/01, B23K 25/00, B23K 26/00, B23K 26/342, B23K 26/354, C21D 9/40, C22C 13/00, C22C 13/02, C22C 38/00, F16C 33/00, B22D 19/16

(54) **SLIDING MEMBER AND MANUFACTURING METHOD THEREFOR**

(30) Priority: 22.03.2023 JP 2023045417
(71) Applicant: Daido Metal Company Ltd., Nagoya-shi, Aichi 460-0008 (JP)
(72) Inventor: HASEGAWA, Shin, Inuyama-shi, Aichi (JP); ITO, Kosuke, Inuyama-shi, Aichi (JP); ASABA, Ryo, Inuyama-shi, Aichi (JP)
(74) Representative: Schulz Junghans Patentanwälte PartGmbB

(57) **Abstract**

A sliding member (10) of the present embodiment includes a Sn alloy layer (11) and an Fe-based back metal layer (12). In any observation cross-section (20) at an interface (21) between the Sn alloy layer (11) and the back metal layer (12), an entire length in which a Sn alloy matrix (13) included in the Sn alloy layer (11) and the back metal layer (12) are in contact with each other is 30% or more of an entire length of the interface (21). In the observation cross-section (20), a sum of areas of the intermetallic compound (14) is 40% or more and 70% or less of a total area of the Sn alloy layer (11). When a plurality of viewing fields having the same area are freely extracted from a cross section of the Sn alloy layer (11), a difference D=A-B between an area percentage A% in a first viewing field having the maximum area percentage of the intermetallic compound (14) among the plurality of viewing fields and an area percentage B% in a second viewing field having the minimum area percentage of the intermetallic compound (14) among the plurality of viewing fields is equal to or smaller than 20%.

## Description

### BACKGROUND OF THE INVENTION

### Field of the Invention

The present embodiment relates to a sliding member and a manufacturing method therefor.

### Description of the Related Art

The sliding member includes, for example, a Sn-based Sn alloy layer on a surface of an Fe-based back metal layer. In order to improve a fatigue resistance, for example, an element such as Cu or Sb, which generates an intermetallic compound between the element and Sn that becomes a matrix of the Sn alloy layer, is added to a Sn alloy that slides with respect to a counter member. Meanwhile, excessive addition of Cu or Sb causes segregation of weak CusSn or the like in the vicinity of an interface between the Sn alloy layer and the back metal layer. Accordingly, excessive addition of Cu or Sb causes reduction in adhesive strength between the back metal layer and the Sn alloy layer. In view of the above, in the case of Japanese Patent Publication No. 50-1687, the amount of addition of Cu is set to a range from 1 mass% to less than 3 mass%. In this manner, in Japanese Patent Publication No. 50-1687, Cu₆Sn₅ and SbSn being intermetallic compounds are made more finer so that segregation of Cu₆Sn₅ is reduced. As a result, in Japanese Patent Publication No. 50-1687, the fatigue resistance of the sliding member is improved, and the adhesion between the back metal layer and the Sn alloy layer is improved.

However, in Japanese Patent Publication No. 50-1687, addition of Cd or Be is required to achieve reduction of the segregation while making the intermetallic compounds in the Sn alloy layer finer. It is desirable to avoid using those elements of Cd and Be in consideration of effects on environment, which has been a problem.

In view of the above, the present embodiment has an object to provide a sliding member having a high fatigue resistance and a high adhesive strength between a Sn alloy layer and a back metal layer, while substances having a large environmental load are excluded, and to provide a manufacturing method for the sliding member.

### SUMMARY OF THE INVENTION

In order to achieve the above-mentioned object, a sliding member of the present embodiment includes: a Sn alloy layer including a Sn alloy matrix and a Sn-based intermetallic compound dispersed in the Sn alloy matrix; and an Fe-based back metal layer having the Sn alloy layer provided on at least one end surface thereof.

In any observation cross-section at an interface between the Sn alloy layer and the back metal layer, an entire length in which the Sn alloy matrix included in the Sn alloy layer and the back metal layer are in contact with each other is 30% or more of an entire length of the interface, and, in the observation cross-section, a sum of areas of the intermetallic compound is 40% or more and 70% or less of a total area of the Sn alloy layer. Further, when a plurality of viewing fields having the same area are freely extracted from a cross section of the Sn alloy layer, a difference D=A-B between an area percentage A% in a first viewing field having a maximum area percentage of the intermetallic compound among the plurality of viewing fields and an area percentage B% in a second viewing field having a minimum area percentage of the intermetallic compound among the plurality of viewing fields is equal to or smaller than 20%.

The inventors have found that a contact state between the Sn alloy matrix of the Sn alloy layer and the back metal layer at the interface between the Sn alloy layer and the back metal layer and a dispersed state of the intermetallic compound included in the Sn alloy layer affect the adhesive strength between the Sn alloy layer and the back metal layer. In the present embodiment, as described above, the contact state between the Sn alloy matrix and the back metal layer and the dispersed state of the intermetallic compound are specified so that the adhesive strength between the Sn alloy layer and the back metal layer is ensured without reducing the fatigue resistance of the Sn alloy layer. Further, in the present embodiment, addition of substances that influence the environment, such as Cd or Be, is unrequired. Thus, while substances having a large environmental load are excluded, the adhesive strength between the Sn alloy layer and the back metal layer and the fatigue resistance can be enhanced.

Further, a manufacturing method for the sliding member of the present embodiment includes an irradiating step, a loading step, and an alloy layer forming step. In the irradiating step, laser light is irradiated to one end surface of the back metal layer. In the loading step, an alloy material that forms the Sn alloy layer is loaded at a focal point of the laser light irradiated in the irradiating step. In the alloy layer forming step, the alloy material loaded in the loading step is molten on a surface of the back metal layer by using the irradiated laser light and the alloy material formed by the melting is bonded to the back metal layer so that the Sn alloy layer is built up on the back metal layer.

As described above, in the present embodiment, the Sn alloy layer is built up on the surface of the back metal layer by so-called laser cladding. In this manner, generation of the intermetallic compound dispersed in the Sn alloy matrix at the interface between the Sn alloy layer and the back metal layer is controlled. Thus, while substances having a large environmental load are excluded, the adhesive strength between the Sn alloy layer and the back metal layer and the fatigue resistance can be enhanced.

### BRIEF DESCRIPTION OF THE DRAWINGS

FIG. 1 is a schematic cross-sectional view showing a sliding member according to one embodiment;
FIG. 2 is a schematic view showing a structure of a Sn alloy layer of the sliding member according to the one embodiment;
FIG. 3 is a schematic cross-sectional view showing an observation cross-section of the sliding member according to the one embodiment;
FIG. 4 is a schematic cross-sectional view showing an observation cross-section of the sliding member according to the one embodiment;
FIG. 5 is a schematic cross-sectional view showing an observation cross-section of the sliding member according to the one embodiment;

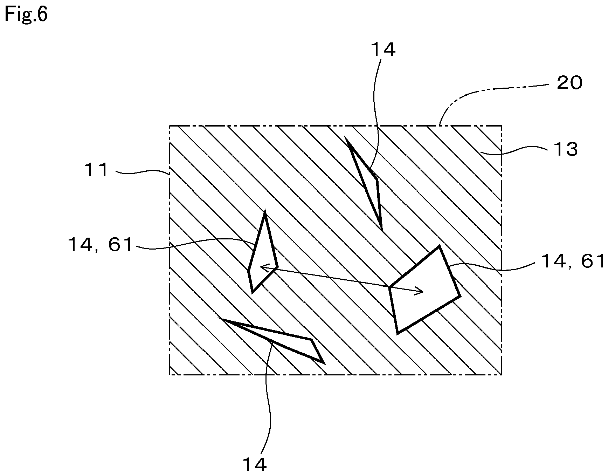

FIG. 6 is a schematic cross-sectional view showing the Sn alloy layer of the sliding member according to the one embodiment;
FIG. 7 is a schematic view for describing manufacture of the sliding member according to the one embodiment using laser cladding;
FIG. 8 is a schematic view for describing manufacture of the sliding member according to the one embodiment using centrifugal casting;
FIG. 9 is a schematic table showing compositions of materials used for the sliding member according to the one embodiment;
FIG. 10 is a schematic table showing conditions of laser cladding used for the manufacture of the sliding member according to the one embodiment;
FIG. 11 is a schematic table showing experiment results of Examples of the sliding member according to the one embodiment;
FIG. 12 is a schematic table showing experiment results of Comparative Examples of the sliding member;
FIG. 13 is a schematic table showing experiment results of Examples of the sliding member according to the one embodiment;
FIG. 14 is a schematic table showing experiment results of Examples of the sliding member according to the one embodiment; and
FIG. 15 is a schematic table showing experiment results of Examples of the sliding member according to the one embodiment.

### DETAILED DESCRIPTION OF THE PREFERRED EMBODIMENT

One embodiment of a sliding member is hereinafter described with reference to the drawings.

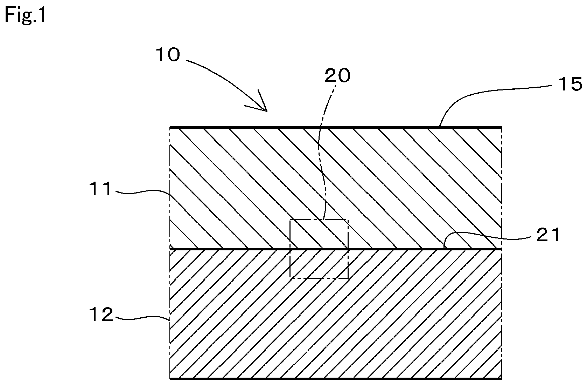

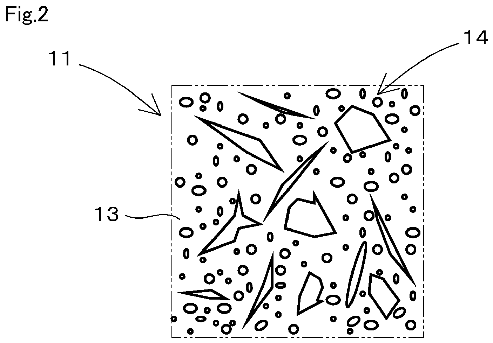

As shown in FIG. 1, a sliding member 10 includes a Sn alloy layer 11 and a back metal layer 12. The Sn alloy layer 11 is formed of a Sn-based alloy, and includes, as shown in FIG. 2, a Sn alloy matrix 13 and an intermetallic compound 14. The Sn alloy matrix 13 is a matrix formed of a Sn alloy forming the Sn alloy layer 11. The intermetallic compound 14 is formed in the form of particles as compounds of various elements forming the Sn alloy layer 11, and is dispersed in the Sn alloy matrix 13. The back metal layer 12 is formed of an Fe-based alloy mainly containing Fe, such as steel or carbon steel. The Sn alloy layer 11 forms a sliding surface 15 that slides with respect to a counter member (not shown), on a side opposite to the back metal layer 12. It should be noted that the sliding member 10 may include another layer such as an overlay layer on an end surface of the Sn alloy layer 11 on a side opposite to the back metal layer 12, that is, on a front surface. For example, the sliding member 10 may include an intermediate layer and an overlay layer (both not shown) on the sliding surface 15 side of the Sn alloy layer 11. The Sn alloy layer 11 has a Vickers hardness of 38 HV or more. As described above, when the hardness of the Sn alloy layer 11 is increased, the fatigue resistance of the sliding member 10 can be enhanced.

The Sn alloy layer 11 contains Sb of 3.0 mass% to 12 mass% and Cu of 4.0 mass% to 18 mass%, and the balance is formed of Sn including unavoidable impurities. Further, the Sn alloy layer 11 may contain, in addition to those elements, at least one metal selected from Bi, Ag, Zn, Cr, or Ba. The Sn alloy layer 11 can contain Bi of 5.0 mass% at maximum, Ag of 10 mass% at maximum, Zn of 10 mass% at maximum, Cr of 0.5 mass% at maximum, and Ba of 0.5 mass% at maximum. In this manner, the Sn alloy layer 11 contains, in the Sn alloy matrix 13, various components such as Sn-Sb, Sn-Ag, and Sn-Cu, as the intermetallic compound 14. The intermetallic compound 14 is not limited to a compound of two elements as exemplified, and may be a compound of three elements or more. It should be noted that, for example, an Fe-Sn component derived from Sn included in the Sn alloy layer 11 and Fe included in the back metal layer 12 is not included in the intermetallic compound in the present embodiment.

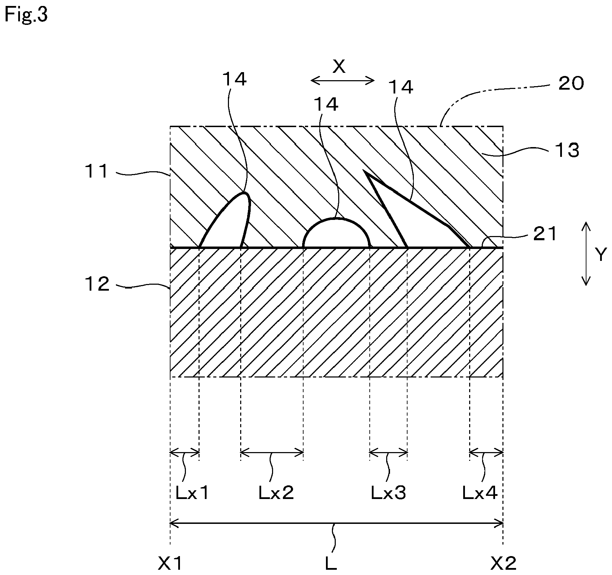

In this sliding member 10, any observation cross-section 20 as shown in FIG. 1 and FIG. 3 is set. The observation cross-section 20 is set in any range of, for example, from about (several micrometers)×(several micrometers) to about (several millimeters)×(several millimeters), in a cross section cut along a thickness direction of the sliding member 10. In this observation cross-section 20, a thickness direction is regarded as a Y direction, and a direction perpendicular to the thickness is regarded as an X direction. In the observation cross-section 20, an interface 21 between the Sn alloy layer 11 and the back metal layer 12 extends in the X direction. The entire length of this observation cross-section 20 in the X direction, that is, a distance between X1 and X2 matches an entire length L of the interface 21 between the Sn alloy layer 11 and the back metal layer 12. Meanwhile, the Sn alloy layer 11 includes the intermetallic compound 14. Accordingly, between the Sn alloy layer 11 and the back metal layer 12, there are parts in which the Sn alloy matrix 13 of the Sn alloy layer 11 and the back metal layer 12 are in contact with each other, and parts in which the intermetallic compound 14 and the back metal layer 12 are in contact with each other. A length in the X direction of the part in which the Sn alloy matrix 13 and the back metal layer 12 are in contact with each other is represented by Lxn, where n is a natural number. At this time, a sum Lx of lengths of the parts in which the Sn alloy matrix 13 and the back metal layer 12 are in contact with each other is Lx=Lx1+Lx2+Lx3+···+Lxn. The length Lxn of the part in which the Sn alloy matrix 13 and the back metal layer 12 are in contact with each other is measured through image analysis of an image obtained by photographing the observation cross-section 20. For the sake of easy description, a case of n=4 shown in FIG. 3 is described below as an example.

In the case of the example shown in FIG. 3, the sum Lx of the lengths of the parts in which the Sn alloy matrix 13 and the back metal layer 12 are in contact with each other is Lx=Lx1+Lx2+Lx3+Lx4. In the present embodiment, the sum Lx being the entire length in which the Sn alloy matrix 13 and the back metal layer 12 are in contact with each other is 30% or more of the entire length L of the interface 21. That is, a contact ratio Lx/L is Lx/L×100≥30(%). As described above, in the case of the present embodiment, the sliding member 10 has, at the interface 21 between the Sn alloy layer 11 and the back metal layer 12, parts in which the Sn alloy matrix 13 and the back metal layer 12 are in contact with each other, which are 30% or more of the entire length L of the interface 21. The adhesive strength between the Sn alloy layer 11 and the back metal layer 12 is ensured in the parts in which the Sn alloy matrix 13 and the back metal layer 12 are in contact with each other. In the case of the sliding member of the present embodiment, the Sn alloy matrix 13 and the back metal layer 12 are in contact with each other in regions of 30% or more of the entire length L at the interface 21. In this manner, an entire length sufficient for ensuring the adhesive strength is ensured between the Sn alloy layer 11 and the back metal layer 12.

Further, in the sliding member 10 of the present embodiment, in any observation cross-section 20, a sum of areas of the intermetallic compound 14 is 40% or more and 70% or less of a total area of the Sn alloy layer 11. That is, a ratio Sm/S of a sum Sm of the areas of the intermetallic compound 14 included in an observation cross-section 20 to a total area S of the Sn alloy layer 11 in this observation cross-section 20 is 40%≤Sm/S×100≤70%. The sum Sm of the areas of the intermetallic compound 14 is measured through image analysis of an image obtained by photographing the observation cross-section 20, similarly to the length Lxn. As the intermetallic compound 14 is increased in the number of the ratio Sm/S being the ratio of the area in the Sn alloy layer 11, the intermetallic compound 14 contributes to the improvement of the fatigue resistance of the sliding member 10. Meanwhile, when the ratio Sm/S of the intermetallic compound 14 in the Sn alloy layer 11 become excessive, the sum Lx of the lengths in which the Sn alloy matrix 13 and the back metal layer 12 are in contact with each other is reduced, resulting in reduction in adhesive strength between the Sn alloy layer 11 and the back metal layer 12. When the sliding member 10 has the ratio Sm/S set to fall within the range of 40%≤Sm/S×100≤70%, both of the improvement of the fatigue resistance and the improvement of the adhesive strength between the Sn alloy layer 11 and the back metal layer 12 can be achieved.

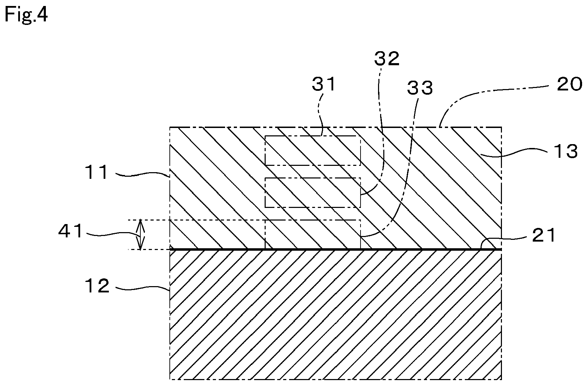

Further, in the sliding member 10 of the present embodiment, a plurality of viewing fields having the same area are freely extracted from the observation cross-section 20 as shown in FIG. 4. In a case of an example shown in FIG. 4, from the observation cross-section 20, three viewing fields of a viewing field 31, a viewing field 32, and a viewing field 33 are extracted. At this time, among the plurality of viewing fields 31, 32, and 33, a viewing field having the maximum area percentage of the included intermetallic compound 14 is referred to as a first viewing field. In addition, the ratio Sm/S of the intermetallic compound 14 in this first viewing field is expressed as an area percentage A%. Similarly, among the plurality of viewing fields 31, 32, and 33, a viewing field having the minimum area percentage of the included intermetallic compound 14 is referred to as a second viewing field. In addition, the ratio Sm/S of the intermetallic compound 14 in this second viewing field is expressed as an area percentage B%. In the sliding member 10 of the present embodiment, a difference D between the area percentage A and the area percentage B, that is, D=A-B is equal to or smaller than 20%. That is, the difference D is D≤20%.

This represents that, among the plurality of viewing fields 31, 32, and 33 extracted from the observation cross-section 20, the first viewing field having the maximum percentage of the intermetallic compound 14 and the second viewing field having the minimum percentage thereof have not much difference therebetween in the area percentage of the intermetallic compound 14 included in the Sn alloy layer 11, that is, in the ratio Sm/S. That is, this represents that the intermetallic compound 14 is substantially uniformly dispersed in the entire Sn alloy layer 11 and is not segregated. As described above, when the intermetallic compound 14 is dispersed in the Sn alloy layer 11 without segregation, the Sn alloy layer 11 is reduced in difference of hardness as a whole. As a result, the fatigue resistance of the sliding member 10 can be improved. It should be noted that the number of viewing fields to be extracted from the observation cross-section 20 is not limited to three as exemplified, and may be two or four or more.

In addition to the above, in the sliding member 10 of the present embodiment, as shown in FIG. 4, in the Sn alloy layer 11, an observation region 41 is set in a region within 3% to a side opposite to the back metal layer 12 from the interface 21 with the back metal layer 12 in the thickness direction. That is, the observation region 41 is set in a range of 3% of the thickness of the Sn alloy layer 11 from the interface 21 to the sliding surface 15 side, in the thickness direction of the Sn alloy layer 11. Among the above-mentioned viewing field 31, viewing field 32, and viewing field 33, the viewing field 33 is set as the observation region 41 in FIG. 4. In this observation region 41, the ratio Sm/S of the sum Sm of the areas of the intermetallic compound 14 to the total area S of the Sn alloy layer 11 is 5% or more and 60% or less. That is, the ratio Sm/S of the sum Sm of the areas of the intermetallic compound 14 in this observation region 41 to the total area S of the Sn alloy layer 11 in the observation region 41 is 5%≤Sm/S×100≤60%. The sum Sm of the areas of the intermetallic compound 14 is measured through image analysis of an image obtained by photographing the observation region 41, similarly to the above. This observation region 41 is a region in the vicinity of the interface 21 close to the back metal layer 12 within the Sn alloy layer 11. Considering the adhesive strength between the Sn alloy layer 11 and the back metal layer 12, a region close to the interface 21 within the Sn alloy layer 11 is not preferred to have segregation of the intermetallic compound 14. When the ratio Sm/S of the area of the intermetallic compound 14 in the observation region 41 is set to 5%≤Sm/S×100≤60%, the ratio of the sum Lx of the lengths in which the Sn alloy matrix 13 and the back metal layer 12 are in contact with each other to the entire length L of the interface 21, that is, the contact ratio Lx/L is increased. Thus, the adhesive strength between the Sn alloy layer 11 and the back metal layer 12 can be ensured. In this case, when the ratio Sm/S of the intermetallic compound 14 in the observation region 41 is 5%≤Sm/S×100≤50%, the adhesive strength between the Sn alloy layer 11 and the back metal layer 12 is further improved.

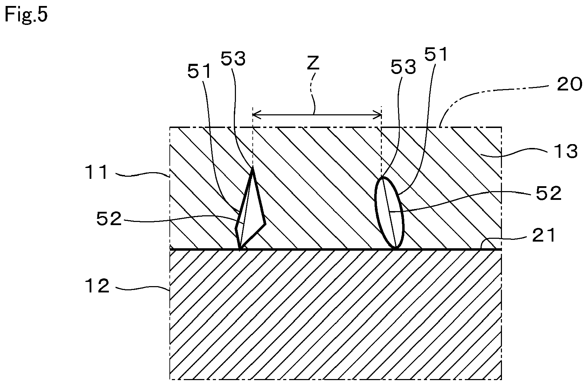

The sliding member 10 of the present embodiment further includes an Fe-Sn compound 51 as shown in FIG. 5. The Fe-Sn compound 51 is a compound derived from Sn included in the Sn alloy layer 11 and Fe included in the back metal layer 12. As described above, this Fe-Sn compound 51 does not form the intermetallic compound 14 of the present embodiment. The Fe-Sn compound 51 is generated on the Sn alloy layer 11 side from the vicinity of the interface 21 when the Sn alloy layer 11 is laminated on the back metal layer 12. The Fe-Sn compound 51 is generated to rise from the interface 21 to the Sn alloy layer 11 side in a needle shape, a column shape, or a bar shape having a long axis 52. Accordingly, the long axis 52 of the Fe-Sn compound 51 extends in a direction substantially perpendicular to the interface 21. The long axis 52 of the Fe-Sn compound 51 is 40 µm or less.

The Fe-Sn compound 51 is generated to rise in the direction of the Sn alloy layer 11 from the interface 21 as described above. In addition, between the Fe-Sn compound 51 and another adjacent Fe-Sn compound 51, a distance Z between a vertex 53 and a vertex 53 of end portions on a side opposite to the interface 21 is 0.5 µm or more. As described above, the Fe-Sn compound 51 has a sufficient distance ensured with respect to another adjacent Fe-Sn compound 51. The Fe-Sn compound 51 is generated in the vicinity of the interface 21, and thus affects the adhesive strength between the Sn alloy layer 11 and the back metal layer 12. That is, when the Fe-Sn compounds 51 are sparsely generated at the interface 21, the adhesive strength between the Sn alloy layer 11 and the back metal layer 12 is improved. When the distance between the vertices 53 of the adjacent Fe-Sn compounds 51 is set to 0.5 µm or more, the adhesive strength between the Sn alloy layer 11 and the back metal layer 12 is sufficiently ensured. Further, the long axis 52 of the generated Fe-Sn compound becomes 40 µm or less when heat applied to the back metal layer 12 is reduced. Accordingly, the entire length of the generated Fe-Sn compound is shortened, and thus the adhesive strength between the Sn alloy layer 11 and the back metal layer 12 can be improved.

The intermetallic compound 14 included in the Sn alloy layer 11 of the sliding member 10 includes a quadrilateral particle 61 having a quadrilateral cross section in the observation cross-section 20. The quadrilateral particle 61 refers to a particle having a quadrilateral prism shape having a sufficient entire length in each axis direction in three dimensions, such as a cube or a cuboid. In the present embodiment, a center-to-center distance between the quadrilateral particle 61 in the intermetallic compound 14 included in the Sn alloy layer 11 and an adjacent quadrilateral particle 61 is 10 µm or more. As described above, it is preferred that the intermetallic compound 14 be uniformly dispersed in the Sn alloy layer 11 and not be segregated for improvement of the fatigue resistance. When the center-to-center distance of the quadrilateral particles 61 is 10 µm or more, this represents that the intermetallic compound 14 is moderately dispersed in the Sn alloy layer 11 and is not segregated. As described above, when a sufficient distance is ensured between the centers of the quadrilateral particles 61, the Sn alloy layer 11 is reduced in difference of hardness as a whole. As a result, the fatigue resistance of the sliding alloy can be improved. Further, it is preferred that the quadrilateral particle 61 have an outer diameter of 30 µm or less. When the outer diameter of the quadrilateral particle 61 is set to 30 µm or less as described above, the hardness of the Sn alloy layer 11 can be reliably ensured.

The amount of addition of Sb included in the Sn alloy layer 11 is preferred to be 12 mass% or less. In this manner, at the time of usage of a manufacturing method that performs rapid heating and rapid cooling, the segregation of the intermetallic compound 14 in the Sn alloy layer 11 can be reduced. Further, the amount of addition of Cu included in the Sn alloy layer 11 is preferred to be 18 mass% or less. In this manner, at the time of usage of the manufacturing method that performs rapid heating and rapid cooling, the segregation of the intermetallic compound 14 in the Sn alloy layer 11 can be reduced. Bi included in the Sn alloy layer 11 contributes to improvement of the strength of the Sn alloy layer 11. Meanwhile, excessive addition of Bi causes reduction in adhesion to the back metal layer 12. In view of the above, the amount of addition of Bi included in the Sn alloy layer 11 is set to 5 mass% or less so that the adhesion can be improved while the strength is improved. When the amount of addition of each of Ag and Zn included in the Sn alloy layer 11 is set to 10 mass% or less, the adhesion to the back metal layer 12 can be improved while the segregation of the intermetallic compound 14 is reduced. Cr and Ba included in the Sn alloy layer 11 contribute to making the intermetallic compound 14 to be generated finer, and hence the addition of 0.5 mass% or less is preferred.

Next, a manufacturing method for the sliding member 10 is described.

The sliding member 10 is manufactured by laser cladding or centrifugal casting.

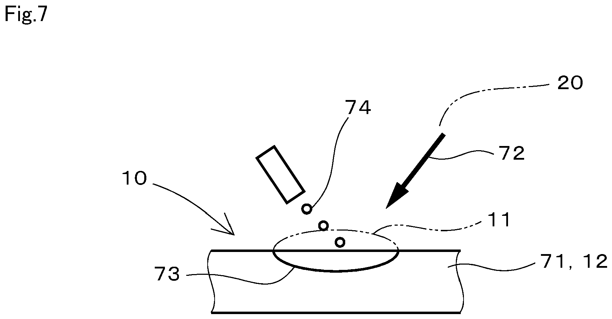

When laser cladding is used, a laser cladding apparatus irradiates laser light 72 to a base material 71 that becomes the back metal layer 12 as shown in FIG. 7. Through irradiation of the laser light 72 to the base material 71, the base material 71 melts to form a molten pool 73. The laser cladding apparatus provides a material 74 that becomes the Sn alloy layer 11 into the molten pool 73 generated by melting this base material 71. The material 74 that becomes the Sn alloy layer 11 is powder having added thereto various elements that generate the intermetallic compound 14, mainly Sn that becomes the Sn alloy matrix 13. As described above, when the material 74 is provided into the molten pool 73 of the base material 71 to which the laser light 72 is irradiated, the Sn alloy layer 11 is welded in a build-up state to the surface of the base material 71. The welded Sn alloy layer 11 is cooled so that the sliding member 10 in which the Sn alloy layer 11 is laminated on the back metal layer 12 is manufactured.

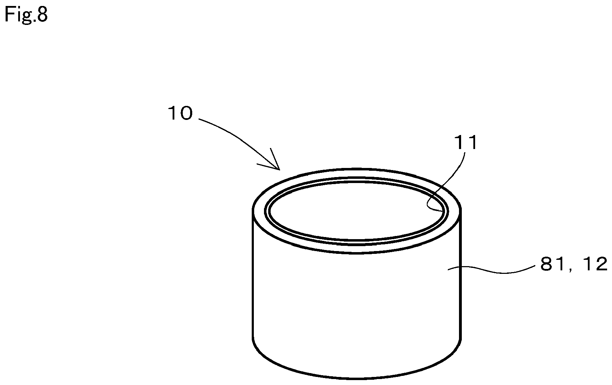

Further, when centrifugal casting is used, as shown in FIG. 8, a base material 81 that becomes the back metal layer 12 is formed into a cylindrical shape. In this case, the base material 81 is not limited to have a cylindrical shape, and may have other shapes such as a half-split shape obtained through division in half in a circumferential direction, or a circular arc shape obtained through division into three or more parts. When centrifugal casting is performed, a material that becomes the Sn alloy layer 11 is heated to, for example, 600°C or more to melt. The molten material is poured to an inner peripheral side of the rotating base material 81. At this time, the base material 81 is cooled from an outer peripheral side opposite to the side on which the material is supplied. In this manner, the poured material cures in a state of being laminated on the inner peripheral side of the base material 81. As a result, the sliding member in which the Sn alloy layer 11 is laminated on the back metal layer 12 is manufactured.

When laser cladding is used, generation of the Sn alloy matrix 13 and the intermetallic compound 14 to be included in the Sn alloy layer 11 is controlled by changing conditions such as output of the laser light 72 and a supply speed of the material 74. Further, when centrifugal casting is used, generation of the Sn alloy matrix 13 and the intermetallic compound 14 to be included in the Sn alloy layer 11 is controlled by changing conditions such as temperature of the material, a supply speed of the material, a rotation speed of the base material 81, and a cooling speed of the base material 81.

Description is hereinafter given of Examples of the sliding member 10 of the present embodiment.

### (Material Compositions)

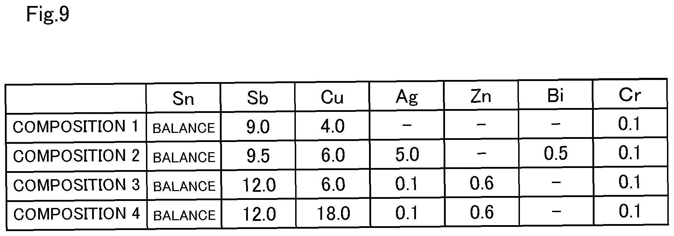

Examples and Comparative Examples of the sliding member 10 used materials of compositions as shown in FIG. 9. Specifically, Examples and Comparative Examples used materials of any one of a composition 1 to a composition 4 shown in FIG. 9. All of the composition 1 to composition 4 form a Sn-based alloy, and necessarily contain Sb and Cu as additive elements. Further, the composition 1 to the composition 4 additionally contain at least one type of Ag, Zn, Bi, or Cr as an additive element.

### (Laser Cladding)

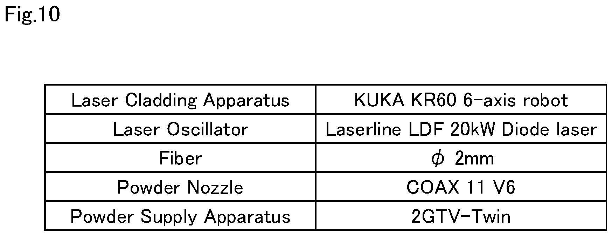

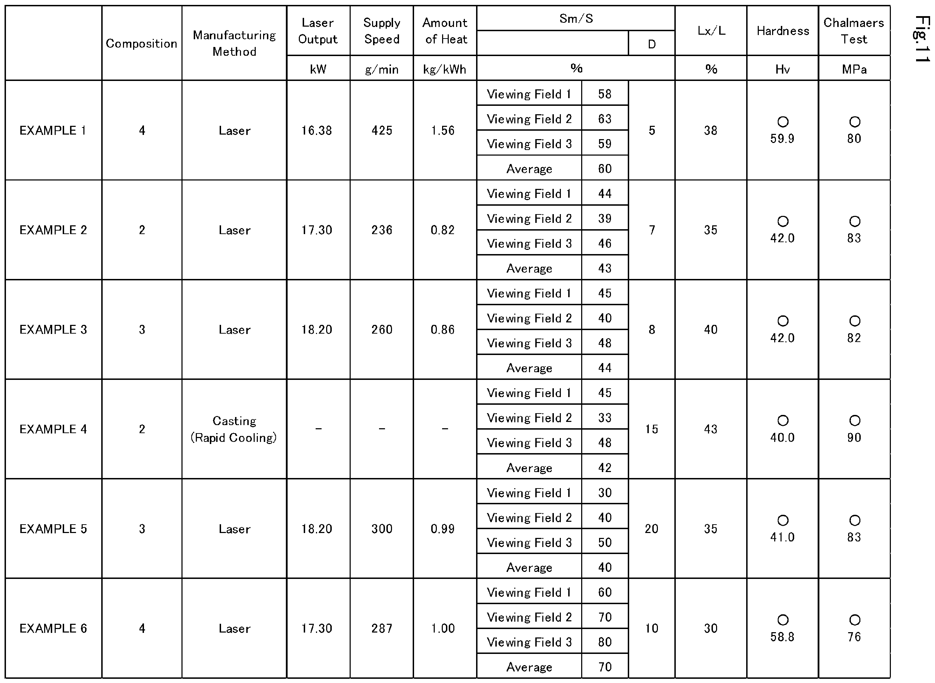

Description is given of manufacture of Examples using laser cladding. Examples of the sliding member 10 formed the Sn alloy layer 11 with use of a laser cladding apparatus having conditions as shown in FIG. 10. A plate-shape "S235JR+C EN10277" was used as the base material 71 that became the back metal layer 12. The Sn alloy layer 11 to be formed by laser cladding was set to have a build-up thickness of 3 mm. The base material 71 having the Sn alloy layer 11 welded thereto was cooled at room temperature. Conditions such as output of the laser light 72 used in the laser cladding apparatus and the supply speed of the material 74 that becomes the Sn alloy layer 11 are shown in FIG. 11 to FIG. 15.

### (Centrifugal Casting)

Description is given of manufacture of Examples using centrifugal casting. A material similar to that in laser cladding was formed into a cylindrical shape as the base material 81 that became the back metal layer 12. The casting thickness was set to 5 mm, and the thickness of the base material 81 was set to 6 mm. The surface of the base material 81 was covered with pure Sn to inhibit oxidation, and was preheated to 300°C to 400°C in a molten liquid of Sn.

The material that became the Sn alloy layer 11 had Sn, Cu, Sb, and other additive elements blended at a composition set in advance, and was molten in the atmosphere. A molten metal of the molten Sn-based alloy was kept at 500°C to 600°C in the atmosphere, and was supplied to the preheated base material 81. After the base material 81 was supplied with the molten metal, the base material 81 was cooled with water from the back side. When rapid cooling was performed, cooling conditions were set to a water flow rate of 2,400 l/min to 2,800 l/min and a period of 13 seconds. Meanwhile, when normal cooling was performed, the cooling conditions were set to the water flow rate of 1,200 l/min to 1,600 l/min and the period of 20 seconds.

### (Evaluations of Examples)

In Examples and Comparative Examples of the formed sliding members 10, as shown in FIG. 11 to FIG. 15, the fatigue resistance was evaluated by the hardness of the Sn alloy layer 11, and the adhesive strength between the Sn alloy layer 11 and the back metal layer 12 was evaluated by the Chalmers test. As the evaluation of the fatigue resistance, a case in which the Vickers hardness of the formed Sn alloy layer 11 was 38 HV or more was regarded as "pass" (circle), and a case in which the Vickers hardness of the formed Sn alloy layer 11 was less than 38 HV was regarded as "fail" (cross mark). Further, as the evaluation of the adhesive strength, a case in which the result of the Chalmers test was 75 MPa or more was regarded as "pass" (circle), and a case in which the result of the Chalmers test was less than 75 HV was regarded as "fail" (cross mark). In the manufacturing methods shown in FIG. 11 to FIG. 15, "laser" represents formation of the Sn alloy layer using laser cladding, "casting (rapid cooling)" represents casting accompanying rapid cooling, and "casting" represents normal casting accompanying no rapid cooling.

Further, regarding the column of "Sm/S" in FIG. 11 to FIG. 15, the "viewing field 1," the "viewing field 2," and the "viewing field 3" are set in order from a position farthest from the back metal layer 12, in the observation cross-section 20 as shown in FIG. 4. In addition, among them, the "viewing field 3" is included in the observation region 41 closest to the back metal layer 12. Further, among those "viewing field 1," "viewing field 2," and "viewing field 3," the viewing field having the maximum ratio Sm/S of the intermetallic compound 14 corresponds to the first viewing field, and the viewing field having the minimum ratio Sm/S of the intermetallic compound 14 corresponds to the second viewing field. In addition, the difference D is calculated from the area percentage A in the first viewing field and the area percentage B in the second viewing field. Moreover, an average value of the area percentages calculated in those "viewing field 1," "viewing field 2," and "viewing field 3" is expressed as the ratio Sm/S of the sum Sm of the areas of the intermetallic compound 14 to the total area S of the Sn alloy layer 11 in the observation cross-section 20.

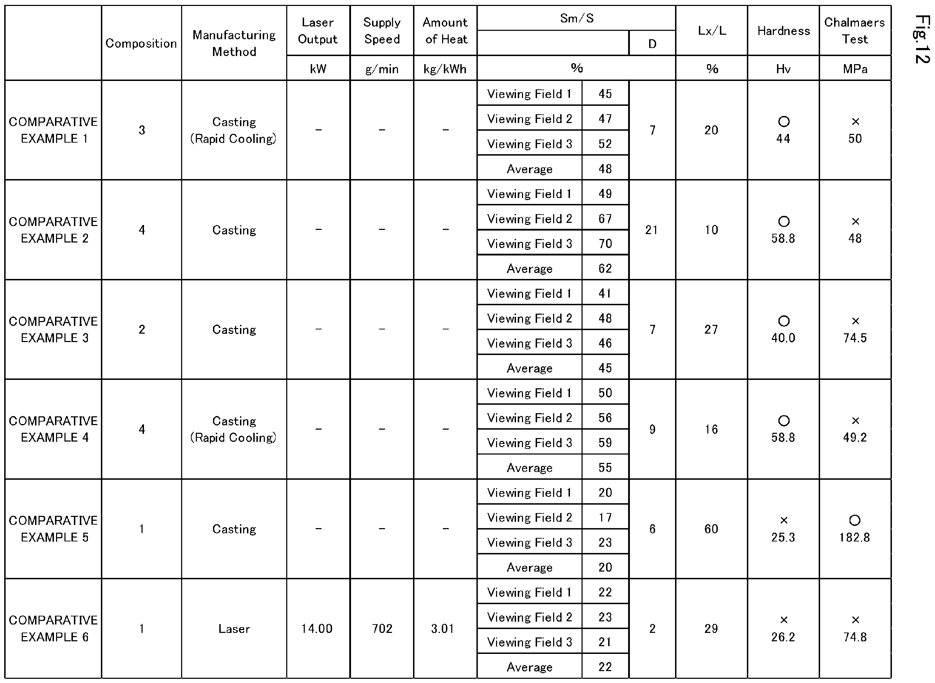

According to Examples shown in FIG. 11 and FIG. 13 to FIG. 15, Example 1 to Example 17 that satisfy the difference D and the contact ratio Lx/L in the Sn alloy layer 11 are "pass" (circle) in both of the hardness and the result of the Chalmers test. In contrast, Comparative Example 1, Comparative Example 3, Comparative Example 4, and Comparative Example 6 shown in FIG. 12 all satisfy the difference D, but do not satisfy the contact ratio Lx/L. The contact ratio Lx/L affects the adhesive strength between the Sn alloy layer 11 and the back metal layer 12. It is understood that Comparative Example 1 to Comparative Example 4 and Comparative Example 6 in which the contact ratio Lx/L is less than 30% are reduced in adhesive strength as compared to Examples. Further, Comparative Example 2 does not satisfy the difference D, and the Chalmers test is "fail" (cross mark). This is because segregation of the intermetallic compound 14 is caused in the case of Comparative Example 2 not satisfying the difference D. Comparative Example 5 satisfies the difference D and Lx/L, but the hardness is "fail" (cross mark). This is because fining of the intermetallic compound 14 in the Sn alloy layer 11 is insufficient in the case of Comparative Example 5 manufactured by casting, resulting in reduction in strength of the Sn alloy layer 11.

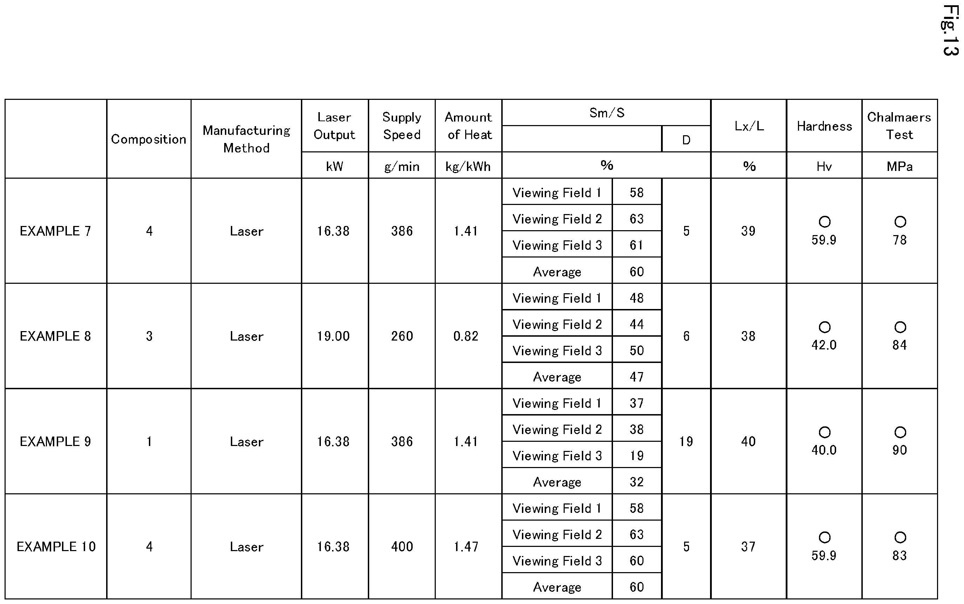

It is understood from Example 7 to Example 10 shown in FIG. 13 that the ratio Sm/S in the viewing field 3 included in the observation region 41 set in the Sn alloy layer 11 is preferably 5% or more and 60% or less, thereby contributing to the improvement of the adhesive strength between the Sn alloy layer 11 and the back metal layer 12. That is, Example 8 having the ratio Sm/S of "50%," Example 9 having the ratio Sm/S of "19%," and Example 10 having the ratio Sm/S of "60%" are improved in the result of the Chalmers test as compared to Example 7.

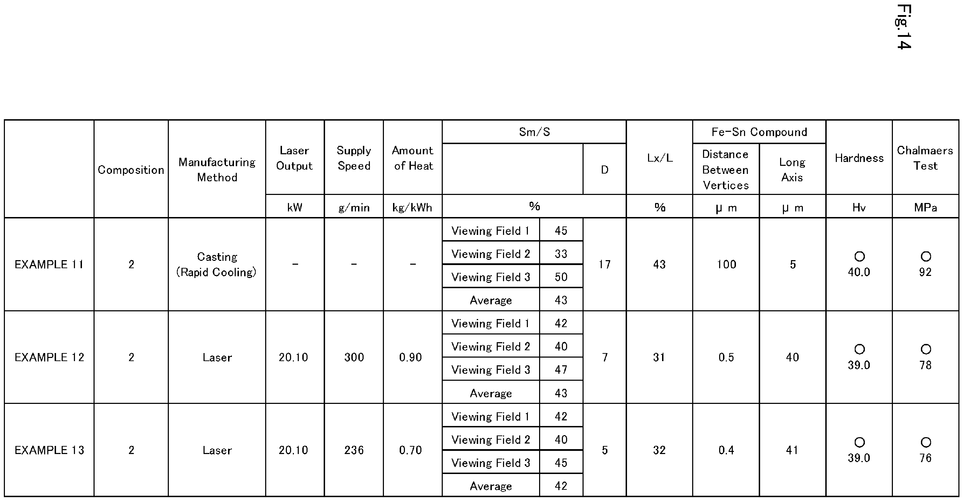

It is understood from Example 11 to Example 13 shown in FIG. 14 that the length of the long axis 52 of the Fe-Sn compound 51 included in the Sn alloy layer 11 is preferably 40 µm or less and the distance between the vertices 53 of the Fe-Sn compounds 51 included in the Sn alloy layer 11 is preferably 0.5 µm or more, thereby contributing to the improvement of the adhesive strength between the Sn alloy layer 11 and the back metal layer 12. That is, Example 11 and Example 12 satisfying the length of the long axis 52 of the Fe-Sn compound 51 and the distance between the vertices 53 thereof are improved in the result of the Chalmers test as compared to Example 13 not satisfying those conditions.

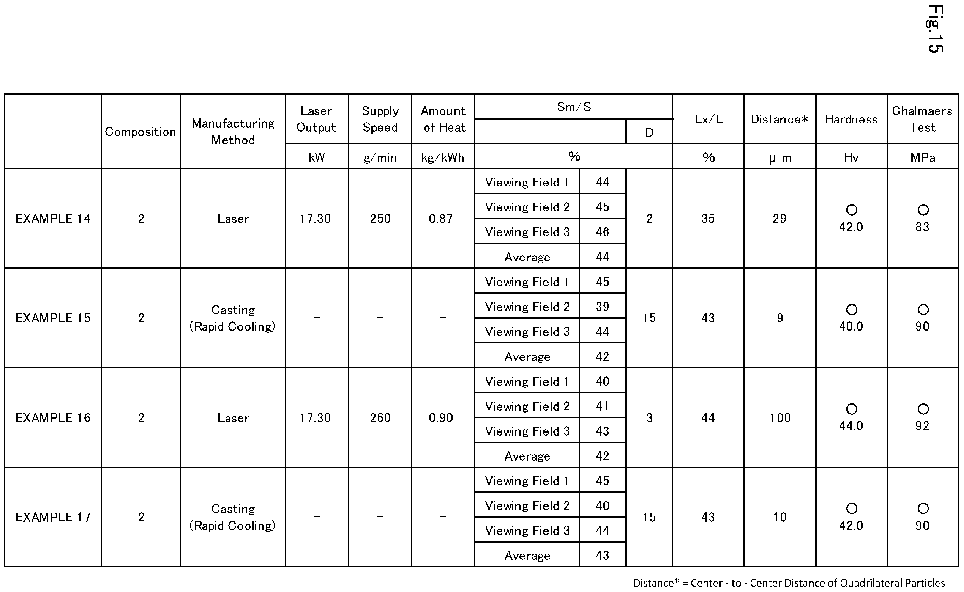

It is understood from Example 14 to Example 17 shown in FIG. 15 that the center-to-center distance of the quadrilateral particles 61 included in the Sn alloy layer 11 is preferably 10 µm or more, thereby contributing to the improvement of the hardness of the Sn alloy layer 11. That is, Example 14, Example 16, and Example 17 having the center-to-center distance of the quadrilateral particles 61 of 10 µm or more are improved in the result of the hardness of the Sn alloy layer 11.

As described above, in the sliding member 10 of the present embodiment, the contact state between the Sn alloy matrix 13 and the back metal layer 12 and the dispersed state of the intermetallic compound 14 included in the Sn alloy layer 11 are specified so that the adhesive strength between the Sn alloy layer 11 and the back metal layer 12 is ensured without reducing the fatigue resistance of the Sn alloy layer 11. Further, in the present embodiment, addition of substances that influence the environment, such as Cd or Be, is unrequired. Thus, while substances having a large environmental load are excluded, the adhesive strength between the Sn alloy layer 11 and the back metal layer 12 and the fatigue resistance can be enhanced.

The present invention described above is not limited to the above-mentioned embodiment, and is applicable to various embodiments without departing from the gist thereof.

For example, the sliding member 10 may include an intermediate layer between the Sn alloy layer 11 and the back metal layer 12. In this case, the intermediate layer is preferred to be a Sn or Sn-alloy plated layer or the like. When such an intermediate layer is provided between the Sn alloy layer 11 and the back metal layer 12, the adhesive strength between the Sn alloy layer 11 and the back metal layer 12 can be further improved.

## Claims

1. A sliding member (10) comprising:
a Sn alloy layer (11); and
an Fe-based back metal layer (12) having the Sn alloy layer (11) provided on at least one end surface side, wherein
the Sn alloy layer (11) includes a Sn alloy matrix (13), and a Sn-based intermetallic compound (14) dispersed in the Sn alloy matrix (13),
in any observation cross-section (20) at an interface (21) between the Sn alloy layer (11) and the back metal layer (12), an entire length in which the Sn alloy matrix (13) included in the Sn alloy layer (11) and the back metal layer (12) are in contact with each other is 30% or more of an entire length of the interface (21),
in the observation cross-section (20), a sum of areas of the intermetallic compound (14) is 40% or more and 70% or less of a total area of the Sn alloy layer (11), and
when a plurality of viewing fields having the same area are freely extracted from a cross section of the Sn alloy layer (11), a difference D=A-B between an area percentage A% in a first viewing field having a maximum area percentage of the intermetallic compound (14) among the plurality of viewing fields and an area percentage B% in a second viewing field having a minimum area percentage of the intermetallic compound (14) among the plurality of viewing fields is equal to or smaller than 20%.

2. The sliding member according to claim 1, wherein, when, in the Sn alloy layer (11), a region within 3% to a side opposite to the back metal layer (12) from the interface (21) in a thickness direction is set as an observation region (41),
the sum of the areas of the intermetallic compound (14) is 5% or more and 60% or less of the total area of the Sn alloy layer (11) in the observation region (41).

3. The sliding member according to claim 1, further comprising an Fe-Sn compound (51) not forming the intermetallic compound (14) and being derived from Sn included in the Sn alloy layer (11) and Fe included in the back metal layer (12), wherein
the Fe-Sn compound (51) rises from the interface (21) in a direction of the Sn alloy layer (11), and is generated in a needle shape having a short axis and a long axis of 40 µm or less, and
between the Fe-Sn compound (51) and another adjacent Fe-Sn compound (51), a distance between vertices on a side opposite to the interface (21) is 0.5 µm or more.

4. The sliding member according to claim 1, wherein
the intermetallic compound (14) includes a quadrilateral particle (61) having a quadrilateral cross section, and
a center-to-center distance between the quadrilateral particle (61) and another adjacent quadrilateral particle (61) is 10 µm or more.

5. The sliding member according to claim 1, wherein the Sn alloy layer (11) has a Vickers hardness of 38 HV or more.

6. The sliding member according to claim 1, wherein the Sn alloy layer (11) contains:
Sb of 3.0 mass% to 12 mass%;
Cu of 4.0 mass% to 18 mass%; and
a balance of Sn including unavoidable impurities.

7. A manufacturing method for the sliding member (10) according to any one of claims 1 to 6, the manufacturing method comprising:
an irradiating step of irradiating laser light to one end surface of the back metal layer (12);
a loading step of loading an alloy material that forms the Sn alloy layer (11), at a focal point of the laser light irradiated in the irradiating step; and
an alloy layer forming step of melting the alloy material loaded in the loading step on a surface of the back metal layer (12) by using the irradiated laser light and bonding the alloy material formed by the melting to the back metal layer (12) to build up the Sn alloy layer (11) on the back metal layer (12).
